# EUROPEAN PATENT APPLICATION

(11) **EP 1 247 564 A2**
(43) Date of publication of application: **09.10.2002**
(21) Application number: 02252200.7
(22) Date of filing: 27.03.2002
(51) Int. Cl.: B01F 15/04, B01F 1/00, B01F 3/12, A01M 7/00, G01F 19/00, G01F 11/28

(54) **Volumetric dispenser**

(30) Priority: 28.03.2001 US 279402
(71) Applicant: Tuthill Corporation, Burr Ridge, Illinois 60521 (US)
(72) Inventor: Bulloch, Ron C., Fort Wayne, Indiana 46814 (US); Miller, Timothy L., Fort Wayne, Indiana 46805 (US); Gehring, Todd C., Ossian, Indiana 46777 (US)
(74) Representative: Howe, Steven

(57) **Abstract**

An inductor or eductor that includes two or more tanks or receptacles that have different volumetric sizes and correspondingly proportional graduate scales by which different incremental volumes of fluids, dry powders, granular materials, etc. can be accurately measured therein. The outlets of the tanks or receptacles are plumbed together so that material in each can be simultaneously evacuated out and into a fluid supply line. Use of the inductor or eductor together with one-way, dry-disconnect valves provides a closed system by which materials such as agricultural chemicals can be accurately, measured, dispensed and transferred.

## Description

The present invention relates to material dispensing inductors and eductors. More specifically, the present invention is directed to volumetric indicators and eductors that can be used to safely dispense accurate volumes of fluids and dry materials.

Chemical herbicides and pesticides are widely used by farmers throughout the world. In a typical manner of operation, the chemicals are purchased by farmers in a concentrated form and then diluted in the field just prior to applying, e.g. spraying, them on the crops.

Handling expensive and concentrated chemicals in the field has always been a problem for farmers and, with the increased toxicity and corrosiveness of today's chemicals, this problem has become one of major concern. This concern is not only for the short term health effects of such exposure including burns and accidental poisoning but also for the long term effects including cancer. For example, a study by the National Cancer Institute and University of Kansas reports that farmers who were exposed to herbicides twenty days a year or more were six times more likely to contract certain types of cancer than people who did not work with or handle such chemicals. The same study also reported that the risk to farmers who actually mixed or applied the chemicals increased eightfold.

In one of the most commonly used spraying techniques, the farmer has a large storage or nurse tank of water in the field from which he periodically fills a smaller sprayer tank mounted on a pickup truck or tractor. In doing so, the concentrated chemicals are either added directly to the sprayer tank or added to the water as it is pumped from the nurse tank to the truck-mounted sprayer tank. Manually measuring and dumping the chemicals into the spray tank is perhaps the oldest and, understandably in view of the health risks, the least favored methods.

An increasingly popular method of handling concentrated agricultural chemicals is to connect a funnel-shaped, graduated tank to the suction side or the pressure side of the water transfer pump between a sprayer and a storage tank. The graduated tank is typically rather large and need not be filled as often as when the chemicals are added directly into the sprayer tank. Nevertheless, it still must be filled as in the prior methods either by hand or by a separate pump. As in the prior methods, this can result in dangerous exposure to the chemicals and contamination of the pump. Additionally, the graduated tank is typically mounted on the pickup truck with the sprayer tank and, because of its relatively large size, it often can be difficult to accurately read the amount of chemicals being dispensed.

The present invention is directed to volumetric indicators and eductors that can be used to safely dispense accurate volumes of fluids and dry materials.

According to other features, characteristics, embodiments and alternatives, the present invention provides a volumetric dispenser which includes:
a first receptacle having a sloped bottom with an outlet therein;
a second receptacle having a sloped bottom with an outlet therein; and
a plumbing system coupling the outlet of the first receptacle to the outlet of the second receptacle and providing a common outlet,
the first receptacle and the second receptacle each having an internal volume with the internal volume of the first receptacle being greater than the internal volume of the second receptacle,
the first receptacle and the second receptacle each having a graduate scale for measuring the volume of material contained therein with the graduate scale of the first receptacle configured to measure larger volumetric increments than the graduate scale of the second receptacle.

The present invention also provides a closed volumetric dispenser system that includes:
a first receptacle having a mouth and a sloped bottom with an outlet therein;
a first one-way, dry-disconnect valve coupled to the mouth of the first receptacle;
a second receptacle having a mouth and a sloped bottom with an outlet therein;
a second one-way, dry-disconnect valve coupled to the mouth of the second receptacle; a plumbing system coupling the outlet of the first receptacle to the outlet of the second receptacle and providing a common outlet; and
a fluid supply line to which the common outlet is coupled,
the first receptacle and the second receptacle each having an internal volume with the internal volume of the first receptacle being greater than the internal volume of the second receptacle,
the first receptacle and the second receptacle each having a graduate scale for measuring the volume of material contained therein with the graduate scale of the first receptacle configured to measure larger volumetric increments than the graduate scale of the second receptacle.

The present invention further provides a method of dispensing a volume of an agricultural chemical which involves:
selecting a volume of an agricultural chemical to be dispensed;
providing one of an inductor and an eductor each having first and second volumetric tanks which are coupled together so as to have a common outlet that is coupled to a fluid supply line, the first volumetric tank having an internal volume that is larger than an internal volume of the second volumetric tank, and each of the first and second volumetric tanks having graduate scales for measuring material therein;
measuring a first portion of the selected volume of agricultural chemical into the first volumetric tank using the graduate scale thereof;
measuring a second remaining portion of the selected volume of agricultural chemical into the second volumetric tank using the graduate scale thereof; and
evacuating the first and second portions of the agricultural chemical from the first and second volumetric tanks into the fluid supply line.

The present invention will be described hereafter with reference to the attached drawings which are given by way of non-limiting examples only, in which:
Figure 1 is a side view of a volumetric dispenser according to one embodiment of the present invention.
Figure 2 is an end view of the volumetric dispenser of Fig. 1.
Figure 3 is a top view of the volumetric dispenser of Fig. 1.

The volumetric dispensers of the present invention are herein referred to as inductors or eductors due to the manner in which they are designed to dispense a measured volume of fluid, granular material or powdered material into either the upstream or downstream portion of a fluid flow that is contained in a pipe, conduit, hose, etc. and driven by a pump.

As depicted in the Figures, the volumetric dispensers of the present invention include two (or more) tanks or receptacles 2 and 4 that are coupled together. The bottoms 6 and 8 of the receptacles 2 and 4 each include an outlet 10 and 12 and bottoms that are sloped downward toward the outlets 10 and 12. The sloped bottoms are configured so that liquids, granular material, powder material, etc. placed into receptacles 2 and 4 will flow under the influence of gravity down the sloped surfaces of the bottoms 6 and 8 towards the outlets 10 and 12, the first receptacle being greater than the second.

The outlets 10 and 12 are configured so that they can be coupled to the inlet side of valves 14 and 16. To provide for such coupling, the outlets 10 and 12 can comprise internal or external threaded structures to which complementary threaded structures on the inlets of valves 14 and 16 can be coupled. Alternatively, other connecting structures can be used such as bayonet mounting structures, coupling rings, etc., or the valves 14 and 15 can be fixedly connected to the outlets 10 and 12 by welding, cementing, etc. Valves 14 and 16 can comprise any suitable type of valve, including off/on valves, e.g., ball valves.

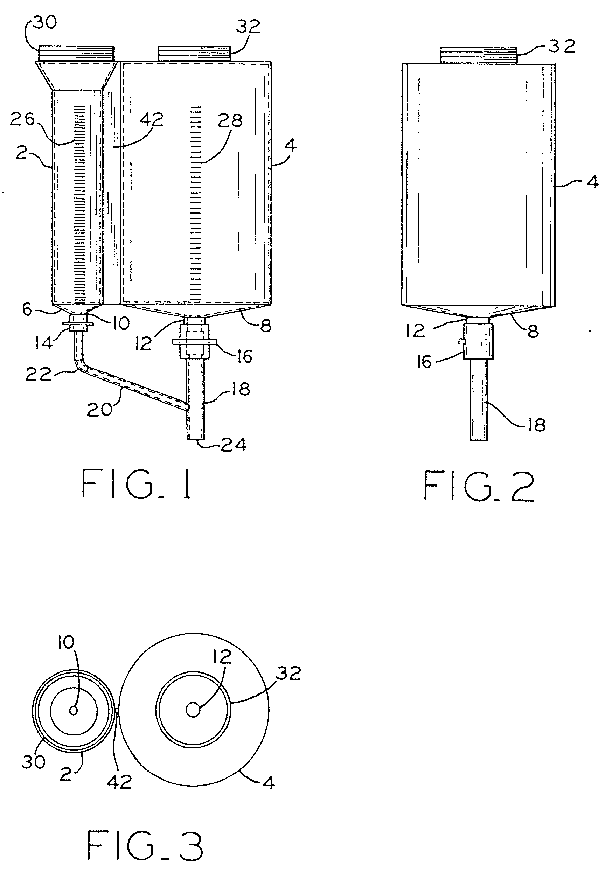

The outlets of the valves 14 and 16 are plumbed together using any suitable configuration of pipes, conduits, hoses, etc. In the illustrative embodiment depicted in Figs. 1 and 2, the outlet of valve 16 is coupled to a straight section of conduit 18 that extends downward from valve 16, and the outlet of valve 14 is coupled to a section of conduit 20 that includes an obtuse bend or elbow 22 and is coupled to conduit 18.

The exact manner in which valves 14 and 16 are plumbed together is not critical, so long as the configuration of pipes, conduits, hoses, etc. allows the contents of the receptacles 2 and 4 to freely drain under the influence of gravity. As will be understood from the discussion below, material to be dispensed from receptacles 2 and 4 is evacuated out through the outlets 10 and 12 by vacuum or suction created by a venturi effect. Nevertheless, the configuration of pipes, conduits, hoses, etc, used to plumb receptacles 2 and 4 together should allow the system to freely drain under the influence of gravity in order to ensure that no residual material remains in the system after and between use.

The plumbing configuration depicted in Fig. 1 provides a single outlet 24 that can be coupled to a fluid supply line (not shown) through which a fluid is transferred by an upstream/downstream pressure difference. In order to create a vacuum or suction to evacuate the material to be dispensed into the fluid supply line, a venturi valve is provided in the fluid supply line and the outlet 24 of the volumetric dispenser is coupled to the venturi valve in a known manner.

The volumetric dispensers of the present invention will function either as inductors or eductors depending on whether the outlets 24 thereof are connected to a fluid supply line upstream or downstream of a pump used to transfer fluid herein. The connection of the single outlet 24 to a venturi valve of the fluid supply line produces a venturi effect which, when fluid is flowing in the fluid supply line, applies a vacuum or suction to the single outlet 24, thereby simultaneously evacuates material from both receptacles 2 and 4 into the flow of fluid in the fluid supply line. If desired, a third valve (not shown) could be provided between the single outlet 24 and the fluid supply line (not shown) for additional control.

The receptacles 2 and 4 are provided with graduate marks in the form of scales 26 and 28 by which the volume of material, e.g. fluid, granular material, powdered material, etc in the receptacles 2 and 4 can be determined. As depicted, receptacle 2 has a smaller volume than receptacle 4. Accordingly, the graduate scale 26 on receptacle 2 can be calibrated for smaller volume measurements than the graduate scale 28 on receptacle 4. According to one illustrative embodiment, a volumetric dispenser according to the present invention can have one receptacle (receptacle 2) with a volume of 0.5 gallons (1.9 litres) and a graduate scale calibrated to have marks identifying 1 ounce (28 g) increments. The other receptacle (receptacle 4) can have a volume of 5 gallons (19 litres) and a graduate scale calibrated to have marks identifying 16 ounce (450 g) increments. Other embodiments can have different sized receptacles and include different graduate scale sizes.

The tops of the receptacles 2 and 4 are designed to receive material such as liquids, granular materials or powdered materials, which are to be volumetrically measured and dispensed into a fluid supply stream. For this purpose, the tops of receptacles 2 and 4 include upstanding externally threaded mouths 30 and 32 to which threaded caps 34 and 36 (Fig. 3) can be removably secured. In alternative embodiments, the mouths of the receptacles 2 and 4 can be recessed or flush with the top surface and can include any suitable coupling structures necessary to receive and cooperate with caps, lids, or other closures.

In order to provide a closed system for the measurement, dispensing and transfer of hazardous materials, the mouths 30 and 32 of receptacles 2 and 4 can be configured, i.e. sized and dimensioned to be coupled to a conventional one-way, dry-disconnect valve such as those exemplified by the Securalink™ system available from Sotera Systems (Fort Wayne, Indiana). The incorporation and use of such one-way, dry-disconnect valve system would provide a closed system that would enable accurate field measurement, dispensing, transfer and application of materials.

It is also possible to provide the larger receptacle 4 with a larger mouth 30 so that materials can be more easily poured therein. If desired, a reducing structure can be used to adapt such a larger mouth to receive a one-way dry-disconnect valve.

In addition to the mouths 30 and 32, the tops of the receptacles 2 and 4 are provided with vents which will allow pressure equalisation of receptacles 2 and 4 when the material therein is evacuated out through the outlets 10 and 12 by the venturi effect created at outlet 24. In the embodiment of the invention depicted in Fig. 3, vents 38 and 40 are provided in caps 34 and 36. It is to be understood that such vents could be included in portions of the tops of receptacles 2 and 4 other than the caps 34 and 36. Also, such vents could be provided with one-way valves, air-permeable, liquid-impermeable membranes or similar means to allow for pressure equalisation without allowing material in the receptacles 2 and 4 to escape.

The receptacles 2 and 4 are preferably coupled together. The embodiment of the invention depicted in Figs. 1-3 illustratively includes a connecting structure 42 that extends between receptacles 2 and 4. When receptacles 2 and 4 are formed from plastic by a moulding process such as blow moulding, both the receptacles 2 and 4 and the connecting structure 42 can be made as a single integral structure, with the connecting structure being formed by pinching or stamping the same if desired. Although other moulding processes can be used and the volumetric dispensers of the present invention can be fabricated in multiple parts which are subsequently assembled, fabricating the receptacles 2 and 4 by a blow moulding process will ensure volumetric accuracy of the receptacles 2 and 4, while producing the receptacles 2 and 4 and the connecting structure in a single moulding process will reduce manufacturing costs.

In order to observe and measure the level of material in the receptacles 2 and 4, the receptacles, or at least portions thereof adjacent graduate scales 26 and 28 are made of a transparent or translucent material. The receptacles 2 and 4 are otherwise made of a material that is non-reactive or inert to the materials to be dispensed thereby. Plastic materials are particularly suitable for field use, since they can resist being broken during rough field use. Although not shown, the volumetric dispensers of the present invention can include mounting structures by which they can be mounted to a trunk, tractor or other type of equipment or support.

In use, the amount of material to be dispensed from the volumetric dispenser of the present invention is determined and the largest portion thereof which can be evenly measured using the graduate scale marks of the larger receptacle 4 is measured into the larger receptacle 4 using the graduate scale 28 thereof. The remaining portion of the determined volume is measured into the smaller receptacle 2 using the graduate scale 26 thereof. For example, to dispense 250 ounces (about 7100 g) of material using a larger receptacle (receptacle 4) having an internal volume of 5 gallons (about 19 litres) and a graduate scale 28 calibrated to have scale marks identifying 16 ounce (about 450 g) increments and a smaller receptacle (receptacle 2) with an internal volume of 0.5 gallon and a graduate scale 26 calibrated to have scale marks identifying 1 ounce (about 28 g) increments, 240 ounces (about 6800 g) are measured into the larger receptacle 4 (16 ounces (about 450 g) x 15 graduate scale marks) and 10 ounces (about 280 g) are measured into the smaller receptacle 2 (1 ounce (about 28 g) x 10 graduate scale marks).

As can be understood, measuring only whole incremental amounts on the graduate scale 28 of the larger receptacle 4 reduces the degree of measurement errors that would otherwise occur if one attempted to estimate volumetric measurements between adjacent ones of the graduate scale marks. Such errors decrease proportionally as the size of the receptacle and the corresponding graduate scale decreases, so that in the example given above, estimating a volume between the 16 ounce (about 450 g) graduate scale marks on the larger receptacle 4 would be more inaccurate than estimating a volume between the 1 ounce (about 28 g) graduate scale marks on the smaller receptacle 2.

The amount of material to be dispensed is measured into the receptacles 2 and 4 with the outlet valves 14 and 16 in their closed positions so as to retain the material in the receptacles 2 and 4. The measured material in each of the receptacles 2 and 4 is then simultaneously dispensed by evacuation into a fluid supply line to which the volumetric dispenser is coupled as discussed above, by opening outlet valves 14 and 16. In the case in which the single outlet 24 of the volumetric dispenser is provided with a third valve, such a third valve can be opened before or after the outlet valves 14 and 16 are opened.

When the volumetric dispensers of the present invention are used in conjunction with one-way, dry-disconnect valve systems, such one-way, dry-disconnect valves are coupled to the mouths 30 and 32 of receptacles 2 and 4. Material can thereafter be transferred from storage containers and measured into receptacles 2 and 4 by manipulating the one-way, dry-disconnect valves in known manners. The material measured into receptacles 2 and 4 is thereafter evacuated into a fluid supply line as discussed above. This "closed system" arrangement substantially eliminates spills, leaks or other incidents that would potentially expose a person to undesirable contact with the materials being transferred, measured and dispensed.

Although the present invention has been described with reference to particular means, materials and embodiments, from the foregoing description, one skilled in the art can easily ascertain the essential characteristics of the present invention and various changes and modifications can be made to adapt the various uses and characteristics without departing from the scope of the present invention as described above and set forth in the attached claims.

## Claims

1. A volumetric dispenser which comprises:
a first receptacle having a sloped bottom with an outlet therein;
a second receptacle having a sloped bottom with an outlet therein; and
a plumbing system coupling the outlet of the first receptacle to the outlet of the second receptacle and providing a common outlet,
the first receptacle and the second receptacle each having an internal volume with the internal volume of the first receptacle being greater than the internal volume of the second receptacle,
the first receptacle and the second receptacle each having a graduate scale for measuring the volume of material contained therein with the graduate scale of the first receptacle configured to measure larger volumetric increments than the graduate scale of the second receptacle.

2. A volumetric dispenser according to Claim 1, wherein the first and second receptacles each include mouths that are provided with a one-way, dry-disconnect valve.

3. A volumetric dispenser according to Claim 2, in which the system is closed and in which the common outlet is connected to a fluid supply line.

4. A closed volumetric dispenser system according to Claim 3, wherein the fluid supply line includes a venturi valve and the common outlet is coupled to a low pressure side of the venturi valve.

5. A volumetric dispenser according to any one of the preceding claims, wherein the first and second receptacles comprise an integral, unitary structure which includes a structure which connects the first and second receptacles together.

6. A volumetric dispenser according to Claim 5, wherein the first and second receptacles and connecting structure comprise a moulded integral, unitary, one-piece component.

7. A volumetric dispenser according to any one of the preceding claims, wherein at least a portion of each of the first and second receptacles proximal to the graduate scales thereof is transparent or translucent.

8. A volumetric dispenser according to any one of the preceding claims, wherein the volumetric ratio of the first receptacle to the second receptacle is from about 5:1 to about 20:1.

9. A volumetric dispenser according to any one of the preceding claims, wherein the internal volume of the first receptacle is from about 2.5 to 7.5 gallons (about 9.5 to 28 litres).

10. A volumetric dispenser according to any one of the preceding claims, wherein the first and second receptacles each include a vent on an upper portion thereof.

11. A volumetric dispenser according to any one of the preceding claims, further comprising shutoff valves coupled to the outlets of each of the first and second receptacles.

12. A method of dispensing a volume of an agricultural chemical which comprises:
selecting a volume of an agricultural chemical to be dispensed;
providing one of an inductor and an eductor each having first and second volumetric tanks which are coupled together so as to have a common outlet that is coupled to a fluid supply line, the first volumetric tank having an internal volume that is larger than an internal volume of the second volumetric tank, and each of the first and second volumetric tanks having graduate scales for measuring material therein;
measuring a first portion of the selected volume of agricultural chemical into the first volumetric tank using the graduate scale thereof;
measuring a second remaining portion of the selected volume of agricultural chemical into the second volumetric tank using the graduate scale thereof; and
evacuating the first and second portions of the agricultural chemical from the first and second volumetric tanks into the fluid supply line.

13. A method of dispensing a volume of an agricultural chemical according to Claim 12, wherein the first portion of the selected volume of agricultural chemical measured into the first volumetric tank is evenly dividable by a volume increment that corresponds to incremental marks of the graduate scale of the first volumetric tank.
